(19) Europäisches Patentamt / European Patent Office / Office européen des brevets

(11) EP 4 478 571 A1

(12) **EUROPEAN PATENT APPLICATION**
published in accordance with Art. 153(4) EPC

(43) Date of publication:
18.12.2024 Bulletin 2024/51

(21) Application number: 22939781.5

(22) Date of filing: 28.09.2022

(51) International Patent Classification (IPC):
*H02J 3/24* (2006.01)

(52) Cooperative Patent Classification (CPC):
**H02J 3/24**

(86) International application number:
**PCT/CN2022/122095**

(87) International publication number:
**WO 2023/206959 (02.11.2023 Gazette 2023/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 28.04.2022  CN 202210470175

(71) Applicant: Beijing Etechwin Electric Co., Ltd.
**Beijing Economic & Technological Development
Zone
Daxing District
Beijing 100176 (CN)**

(72) Inventors:
• **ZHANG, Wei**
  **Beijing 100176 (CN)**
• **ZHENG, Dehua**
  **Beijing 100176 (CN)**
• **TALEMU, Solomonnetsane**
  **Beijing 100176 (CN)**

(74) Representative: **Gulde & Partner
Patent- und Rechtsanwaltskanzlei mbB
Wallstraße 58/59
10179 Berlin (DE)**

(54) **MICRO-GRID CONTROL METHOD AND APPARATUS, AND POWER SUPPLY CONTROL METHOD AND APPARATUS**

(57)    A method and apparatus for controlling a microgrid as well as a method and apparatus for controlling power sources are provided. The method for controlling a microgrid includes: acquiring impedance values of respective ones of power source clusters in the microgrid; determining whether a dynamic disturbance occurs in the microgrid according to the acquired impedance values; and performing, upon determining that the dynamic disturbance occurs in the microgrid, control of the microgrid according to the acquired impedance values such that the microgrid is restored to a stable operating state, wherein each of the power source clusters includes at least one group of grid-supporting power sources and/or at least one group of grid-forming power sources.

Fig.6

**Description**

**TECHNICAL FIELD**

The present disclosure substantially relates to the field of electric power technology, and more particularly, to a method and apparatus for controlling a microgrid and a method and apparatus for controlling a power source.

**BACKGROUND**

With development of regional power systems (e.g., regional zero-carbon power systems), the uncertainty and stability of the system are increasingly being challenged. Due to a high proportion of renewable energies (hereinafter also referred to as new energies), the regional power system exhibits weak rotational inertia, weak stability, weak disturbance resistance, and weakened stability recovery ability after faults occur. How to maintain the stability of the system under disturbances while increasing the penetration rate of renewable energy is an important issue placed in front of people.

Fluctuations and faults (e.g. occurrence of faults or clearance of faults) in an output power of a high-load power source or a large number of distributed power sources will cause serious disturbances to the system. A system for controlling dynamic disturbances of a microgrid should accurately identify the disturbances to enables a fault detection signal to quickly return to a normal value, so as to ensure that a breaker does not trip. Especially for a microgrid of 3 5kV or below that requires on-site consumption of new energies, dynamic voltage oscillation and power angle swing may easily arise in a case of a higher penetration rate of new energies, seriously endangering stable operation of the system and insulation between various devices.

**SUMMARY**

Exemplary embodiments of the present disclosure provide a method and apparatus for controlling a microgrid and a method and apparatus for controlling a power source, which can quickly and accurately identify whether a dynamic disturbance occurs in the microgrid, and control, when the dynamic disturbance occurs in the microgrid, the microgrid to restore to a stable operating state.

According to a first aspect of the embodiments of the present disclosure, there is provided a method for controlling a microgrid, including: acquiring impedance values of respective ones of power source clusters in the microgrid; determining whether a dynamic disturbance occurs in the microgrid according to the acquired impedance values; and performing, upon determining that the dynamic disturbance occurs in the microgrid, control of the microgrid according to the acquired impedance values such that the microgrid is restored to a stable operating state, wherein each of the power source clusters includes at least one group of grid-supporting power sources and/or at least one group of grid-forming power sources.

According to a second aspect of the embodiments of the present disclosure, there is provided a method for controlling a power source, including: acquiring an impedance value of a power source cluster including the power source; and performing, when the impedance value satisfies a preset condition, control of the power source according to the impedance value such that a microgrid including the power source cluster is restored to a stable operating state, wherein the preset condition includes that a duration for the impedance value being within a preset impedance interval reaches a preset time period.

According to a third aspect of the embodiments of the present disclosure, there is provided an apparatus for controlling a microgrid, including: an impedance acquisition unit configured to acquire impedance values of respective ones of power source clusters in the microgrid; a dynamic disturbance determination unit configured to determine whether a dynamic disturbance occurs in the microgrid according to the acquired impedance values; and a control unit configured to perform, upon determining that the dynamic disturbance occurs in the microgrid, control of the microgrid according to the acquired impedance values such that the microgrid is restored to a stable operating state, wherein each of the power source clusters includes at least one group of grid-supporting power sources and/or at least one group of grid-forming power sources.

According to a fourth aspect of the embodiments of the present disclosure, there is provided an apparatus for controlling a power source, including: an impedance acquisition unit configured to acquire an impedance value of a power source cluster including the power source; and a control unit configured to perform, when the impedance value satisfies a preset condition, control of the power source according to the impedance value such that a microgrid including the power source cluster is restored to a stable operating state, wherein the preset condition includes that a duration for the impedance value being within a preset impedance interval reaches a preset time period.

According to a fifth aspect of the embodiments of the present disclosure, there is provided a computer-readable storage medium storing a computer program, which causes, when executed by a processor, the processor to perform the method for controlling a microgrid or the method for controlling a power source as described above.

According to a sixth aspect of the embodiments of the present disclosure, there is provided a microgrid controller, including: a processor; and a memory storing a computer program, which causes, when executed by the processor, the processor to perform the method for controlling a microgrid as described above.

According to a seventh aspect of the embodiments of the present disclosure, there is provided a power source controller, includes: a processor; and a memory storing a computer program, which causes, when executed by the processor, the processor to perform the method for controlling a power source as described above.

In the method and apparatus for controlling a microgrid and the method and apparatus for controlling a power source according to exemplary embodiments of the present disclosure, whether a dynamic disturbance occurs in a microgrid is identified by using an impedance value measured at a grid-forming power source and/or a grid-supporting power source of the microgrid, and upon determining that the dynamic disturbance occurs in the microgrid, the microgrid is controlled based on the measured impedance value to return to a stable operating state.

Additional aspects and/or advantages of general concepts of the present disclosure will be partially clarified in the following description, and will be partially apparent from the description, or may be learned by practice of the general concepts of the present disclosure.

## BRIEF DESCRIPTION OF THE DRAWINGS

The above and other objects and features of exemplary embodiments of the present disclosure will become more apparent from the following description taken in conjunction with the accompanying drawings which exemplarily illustrate the embodiments, in which:

Fig.1 illustrates a topology diagram of a microgrid system according to an exemplary embodiment of the present disclosure;

Fig.2 illustrates a measured voltage curve of a microgrid in a stable operating state according to an exemplary embodiment of the present disclosure;

Fig.3 illustrates a diagram of voltage and current vectors of a microgrid in a stable operating state according to an exemplary embodiment of the present disclosure;

Fig.4 illustrates measured voltage and current curves of a microgrid in a dynamically unstable operating state according to an exemplary embodiment of the present disclosure;

Fig. 5 illustrates a diagram of voltage and current vectors of a microgrid in a dynamically unstable operating state according to an exemplary embodiment of the present disclosure;

Fig.6 illustrates a flowchart of a method for controlling a microgrid according to an exemplary embodiment of the present disclosure;

Fig.7 illustrates an equivalent diagram for impedance calculation according to an exemplary embodiment of the present disclosure;

Fig. 8 illustrates a diagram of a measured impedance value of a microgrid system in a dynamically unstable operating state according to an exemplary embodiment of the present disclosure;

Fig.9 illustrates a schematic diagram of oscillation intervals in various ranges according to an exemplary embodiment of the present disclosure;

Fig. 10 illustrates a flowchart of a method for determining an output voltage reference value of a grid-supporting power source in a power source cluster based on an impedance value of a power source cluster, according to an exemplary embodiment of the present disclosure;

Figs. 11 and 12 illustrate block diagrams regarding a method for determining an output voltage reference value of a grid-supporting power source in a power source cluster based on an impedance value of a power source cluster, according to an exemplary embodiment of the present disclosure;

Fig. 13 illustrates a flowchart of a method for determining an output voltage reference value of a grid-forming power source in a power source cluster based on an impedance value of a power source cluster, according to an exemplary embodiment of the present disclosure;

Figs. 14 and 15 illustrate block diagrams of a method for determining an output voltage reference value of a grid-forming power source in a power source cluster based on an impedance value of a power source cluster, according to an exemplary embodiment of the present disclosure;

Fig. 16 illustrates a flowchart of a method for controlling a power source according to an exemplary embodiment of the present disclosure;

Fig. 17 illustrates a flowchart of a method for determining an output voltage reference value of a power source based on an impedance value, according to an exemplary embodiment of the present disclosure;

Fig. 18 illustrates a flowchart of a method of determining an output voltage reference value of a power source based on an impedance value, according to another exemplary embodiment of the present disclosure;

Fig. 19 illustrates a structural block diagram of an apparatus for controlling a microgrid according to an exemplary embodiment of the present disclosure; and

Fig.20 illustrates a structural block diagram of an apparatus for controlling a power source according to an exemplary embodiment of the present disclosure.

**DETAILED DESCRIPTION**

Reference will now be made in detail to the embodiments of the present disclosure, examples of which are illustrated in the accompanying drawings, wherein like reference numerals refer to like parts. The embodiments will be described below with reference to the accompanying drawings in order to explain the present disclosure.

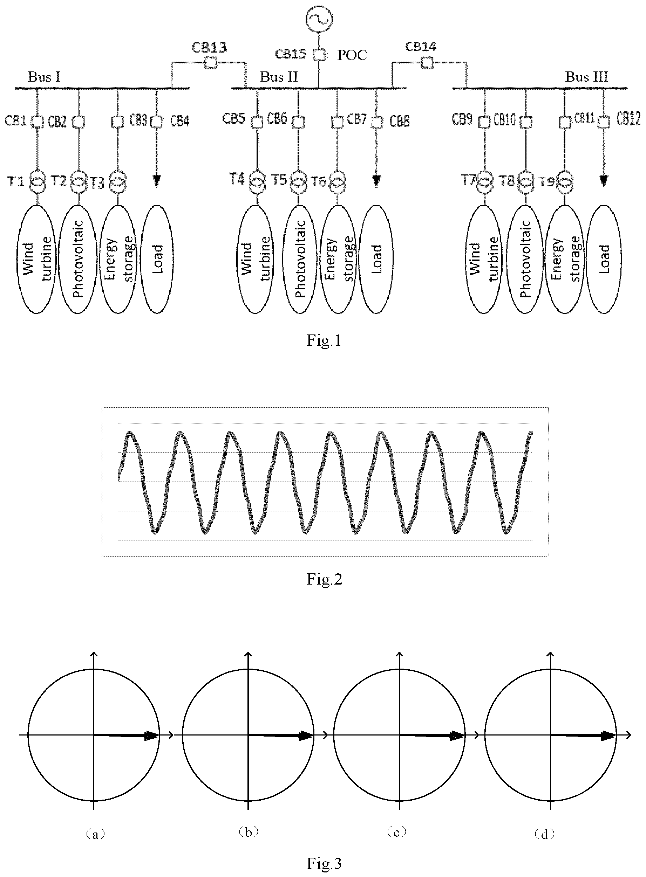

Large capacity microgrids are substantially local power systems with voltage levels below 35kV. In addition to traditional power systems and transformer substations, the rest of the system mainly consists of loads, primary systems such as distributed renewable energies and energy storage, and secondary systems such as protection and stability control system. Fig.1 illustrates a topology diagram of a microgrid system according to an exemplary embodiment of the present disclosure. The microgrid system can operate independently or weakly connected to a grid system.

As shown in Fig. 1, the microgrid system mainly includes a grid-forming converter-based generator(Grid-forming CBG, referred to as Grid-forming power source), a grid-following converter-based generator (Grid-following CBG, referred to as Grid-following power source), a grid-supporting converter-based generator(Grid-supporting CBG, referred to as Grid-supporting power source), various loads and electrical transmission and distribution lines and the like in the microgrid. The voltage level of each section of the microgrid system's busbar is usually between 10kV and 35kV. The Grid-forming power source (Grid-forming CBG) may be defined as a generator which is connected to a grid through a controllable voltage source converter, which has capabilities of controlling voltage and frequency of the grid. The Grid-supporting power source (Grid-supporting CBG) may be defined a generator which is connected to the grid through a voltage source converter or a current source converter, which has capabilities of actively assisting in regulation of the frequency and voltage of the grid. The Grid-following power source (Grid-following CBG) may be defined as a generator which is connected to the grid through a current source converter, which does not have capability of actively assisting in regulation of the frequency and voltage of the grid.

Each of nodes in the microgrid system topology shown in Fig. 1 will be described below. Bus I represents a first section of a microgrid busbar, Bus II represents a second section of the microgrid busbar, and Bus III represents a third section of the microgrid busbar. The microgrid is connected to a main grid at a point of connection (POC), and a voltage level at the point of connection substantially is between 10kV and 35kV CB4, CB8, and CB12 on each section of the busbar are load circuit breakers, and the outgoing lines of the busbar are supplied with low-voltage power through a step-down transformer. CB2, CB6, and CB10 on each section of the busbar represent photovoltaic power generation circuit breakers, and the photovoltaic power generation units are connected to the each section of the busbar through corresponding step-up transformers. CB1, CB5, and CB9 on each section of the busbar represent the outgoing circuit breakers of the wind turbine, and wind turbines are connected to each section of the busbar through corresponding step-up transformer. CB3, CB7, CB11 on each section of the busbar are energy storage circuit breakers, and the energy storages are connected to each section of the busbar through corresponding step-up transformers. CB15 is a circuit breaker at the point of connection (that is, the POC in Fig. 1) where the microgrid is located. CB13 and CB44 represent busbar connected circuit breakers. In Fig. 1, the energy storage serves as a grid-forming power source (Grid-forming CBG), either the photovoltaic power generation unit or the wind turbine may serve as a grid-supporting power source (Grid-supporting CBG), or may serve as a grid-following power source (Grid-following CBG).

It should be understood that the present disclosure is not limited to the voltage level of 10kV, and other voltage levels such as 20kV, 35kV, 400V, etc. are also suitable. The present disclosure is not limited to the form of the main electrical connection shown in Fig. 1, and a single busbar without segmentation, single busbar with multiple sections, double busbar connection, a ring-network power supply line structure, a radial area structure, etc. are also suitable. Moreover, a voltage level at a load node is not limited to 10kV, and other nodes that meet medium and low voltage level specifications are also suitable. The grid-forming power source (Grid-forming CBG) in the present disclosure is not limited to the energy storage, and other forms of stable power sources, such as a microfuel engine or a gas turbine, are also suitable. The grid-supporting power source (Grid-supporting CBG) and the grid-following power source (Grid-following CBG) in the present disclosure are not limited to the photovoltaic power generation unit and the wind turbine, and other power sources that meet the above definition are also within a protection scope of the present disclosure.

When the microgrid is operating in a normal mode, such as when a penetration rate of new energies is lower or loads are smaller, for example, only one wind turbine and one photovoltaic power generation unit are provided in the microgrid system, due to matching of a load power with a generated power together with an energy storage capacity, variations in voltage and current of the microgrid in the operating state relative to the larger grid are shown in Figs. 2 and 3.

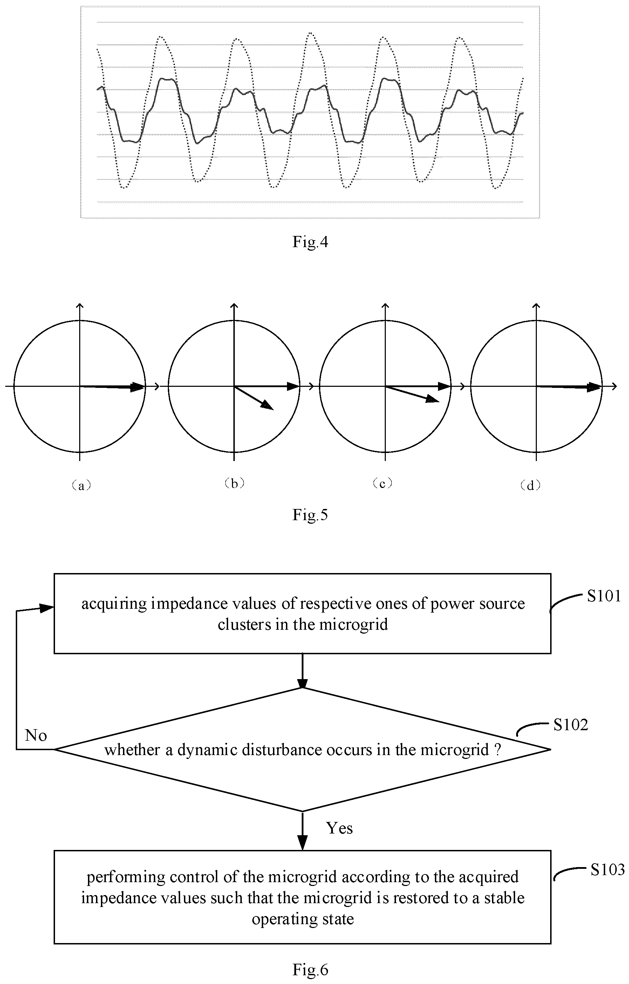

When the loads in the microgrid increases or the penetration rate of new energies increases, for example, the number of wind turbines and photovoltaic power generation units respectively increases to two, dynamic instability (dynamic disturbances) may arise in the microgrid system, and variations in voltage and current of the microgrid relative to the large power grid under this operating state can be shown in Figs. 4 and 5. Microgrid dynamic disturbance refers to severe changes in the voltage and current of the microgrid caused by factors such as renewable energies accounting for a sufficiently higher proportion of renewable energy generation, non-linear loads, planned islanding, intermittency and fluctuations in output powers of the renewable energies, and grid-side faults, which lasts for 50 milliseconds to 2 seconds.

In Fig.4, the dotted line represents the voltage of the microgrid in a dynamic unstable state, and the solid line represents the corresponding current. Compared with Fig.2, it can be seen that the voltage and current in Fig.4 repeat every three cycles, that is, the power angle changes a round every three cycles. Moreover, compared with Fig.3, it can be seen from Fig.5 that a ratio of voltage to current (i.e. impedance value) and the angle between the voltage and the current (i.e. power factor angle) are changing, and which is one round every three cycles, and then return to their initial values after the three cycles. It can be seen that the high permeability of new energies is easy to induce dynamic instability of the microgrid, leading to dynamic voltage oscillation accompanied by power angle swing, which seriously endangers the stable operation of the system and insulation of the equipment.

Existing methods to solve the problems of voltage oscillation and power angle swing in a power system mainly focus on increasing of system inertia and damping. However, a power system which mainly includes new energies substantially uses a power electronic device as a converter, resulting in low system rotational inertia. System damping may be improved by directly connecting a rotary generator to the power system, but energy inputs of the rotary generator mainly rely on traditional oil and gas, which is detrimental to carbon emissions and environmental indicators. Further, a relay protection device may be employed to remove disturbance sources and non-important loads, but this may reduce reliability and economy of power supply of the system, and on the other hand, the control and protection cannot form a good coordination, which will further expand the scope of the accident. Furthermore, a filter may be employed to improve quality of power supply of the system, but harmonic control may not be effective because harmonics may not be the main cause in the case of dynamic voltage oscillation accompanied by power angle swing.

In view of the above, the present disclosure provides a method and apparatus for controlling a microgrid and a method and apparatus for controlling a power source, which can identify whether a dynamic oscillation occurs in a microgrid system according to an impedance value measured at a grid-forming power source or a grid-supporting power source, and control, upon identifying that the dynamic oscillation occurs in the microgrid system, the microgrid system to restore to a stable operating state. As a result, the microgrid system can operate stably even under a higher penetration rate, and phenomena such as relay protection tripping, safety automatic device action splitting, and power frequency overvoltage that endangers insulation due to unstable dynamic oscillation can be avoided.

It should be understood that the method and apparatus for controlling a microgrid and the method and apparatus for controlling a power source according to the present disclosure is applicable not only to the above-exemplified scenarios, but also to other suitable scenarios, which is limited in the present disclosure.

Fig.6 illustrates a flowchart of a method for controlling a microgrid according to an exemplary embodiment of the present disclosure. As an example, the method for controlling a microgrid according to the exemplary embodiment of the present disclosure may be performed by a microgrid controller.

Referring to Fig.6, at step S101, impedance values of respective ones of power source clusters in the microgrid are acquired.

Each of the power source clusters may include at least one group of grid-supporting power sources and/or at least one group of grid-forming power sources. Each group of grid-supporting power sources may include at least one grid-supporting power source. Each group of grid-forming power sources may include at least one grid-forming power source.

As an example, the grid-supporting power source may include, but is not limited to, at least one of a wind turbine or a photovoltaic power generation unit. It should be understood that other types of new energy generators are also suitable, and the present disclosure is not limited hereto.

As an example, the grid-forming power source may include, but is not limited to, at least one of an energy storage device, a microfuel engine, or a gas turbine. It should be understood that other types of stable power sources are also suitable, and the present disclosure is not limited hereto.

As an example, the power source clusters in the microgrid may be provided in advance according to appropriate division methods, and the power source clusters may be equipped with corresponding impedance measurement devices for measuring the impedance values of the respective power source clusters.

As an example, the impedance values may be measured at respective output terminals of the power source clusters. For example, the impedance values may be measured at respective output terminals (i.e., high-voltage side output terminals) of step-up transformers of the power source clusters.

It should be understood that grid-supporting power sources included in a same power source cluster may be same or different, and grid-forming power sources included in a same power source cluster may be same or different. For example, a plurality of wind turbines may be divided into a power source cluster, and a plurality of photovoltaic power generation units may be divided into a power source cluster, or a plurality of wind turbines and a plurality of photovoltaic power generation units may be divided into a power source cluster. At least one energy storage device may be divided into a power source cluster, for example.

As an example, referring to Fig. 1, the "wind turbine" on each section of the busbar shown in Fig. 1 may refer to a power source cluster including at least one wind turbine, and the "photovoltaic" on each section of the busbar may refer to a power source cluster including at least one photovoltaic power generation unit. The "energy storage" on each section of the busbar may refer to a power source cluster including at least one energy storage device. Correspondingly, an impedance measurement device may be provide near an output terminal of a step-up transformer of each of the power source clusters to measure the impedance value of the power source cluster in real time. Additionally, as another example, a grid-forming power source and a grid-supporting power source on each section of the busbar may be divided into a power source cluster.

At step S102, whether a dynamic disturbance occurs in the microgrid is determined according to the acquired impedance values.

As an example, it may be determined that the dynamic disturbance occurs in the microgrid when the impedance value of at least one of the power source clusters satisfies a first preset condition. The first preset condition may include that a duration for the impedance value being within a first impedance interval reaches a preset time period.

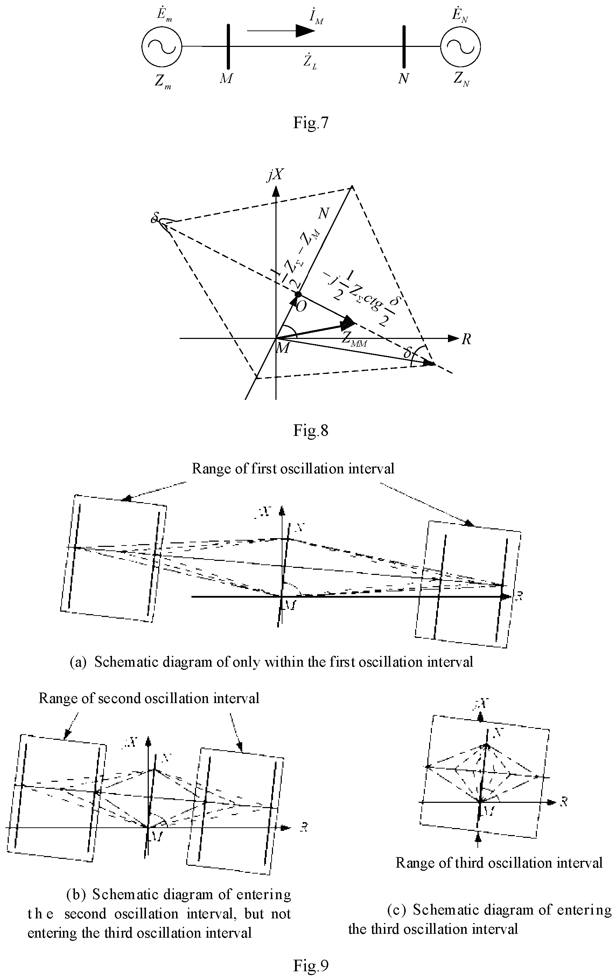

The present disclosure takes into account that the occurrence of dynamic instability in the microgrid is mainly characterized by an oscillation frequency that is not fixed and is basically in a sub-synchronous category, and a fast power angle swing speed. According to Fig. 4 and Fig. 5, it can be calculated that the measured impedance values vary during the occurrence of the dynamic instability. In order to describe the principle of measuring impedance more clearly, an equivalent schematic diagram is illustrated in Fig.7. Oscillatory occurs during the operation of the microgrid, and the current may be expressed as follow:

$$\dot{I}_M = \frac{\dot{E}_M - \dot{E}_N}{Z_M + Z_L + Z_N} = \frac{\dot{E}_M - \dot{E}_N}{Z_\Sigma} \qquad (1)$$

where $\dot{I}_M$ represents an output current of a generator, $\dot{E}_M$ represents a terminal voltage of the generator, $\dot{E}_N$ represents a voltage at a grid bus N, M represents a generator bus, N represents the grid bus, $Z_M$ represents impedance of the generator, $Z_L$ represents impedance of the line, and $Z_N$ represents impedance of the grid , and $Z_\Sigma = Z_M + Z_L + Z_N$.

A bus voltage $\dot{U}_M$ at the point M is expressed as:

$$\dot{U}_M = \dot{E}_M - \dot{I}_M Z_M \qquad (2)$$

The impedance measured at the point M is expressed as:

$$Z_{MM} = \frac{\dot{U}_M}{\dot{I}_M} = \frac{\dot{E}_M - \dot{I}_M Z_M}{\dot{I}_M} = \frac{Z_\Sigma}{1 - he^{-j\delta}} - Z_M \qquad (3),$$

Where $Z_{MM}$ represents measured impedance of the terminal, $h$ represents a ratio of the bus voltage at the point M to a bus voltage at the point N, and $\delta$ represents a power angle. Since lines in the microgrid are short, $h$ in the above formula may be approximately considered to be 1. It is further deduced that:

$$Z_{MM} = \frac{Z_\Sigma}{1 - e^{-j\delta}} - Z_M = (\frac{1}{2} Z_\Sigma - Z_M) - j\frac{1}{2} Z_\Sigma ctg\frac{\delta}{2} \qquad (4)$$

In view of this, the measured impedance value during oscillation of the microgrid system can be obtained, as shown in Fig. 8. According to the above discussion and Fig. 8, when the microgrid system oscillates with dynamic instability, the measured impedance value moves quickly on the dotted lines. When the impedance value during oscillation is at a point O as shown in Fig. 8, a maximum oscillation amplitude under this operation condition will occur.

Returning to Fig.6, when it is determined in the step S 102 that the dynamic disturbance occurs in the microgrid, step S103 is executed to control the microgrid according to the acquired impedance values such that the microgrid is restored to a stable operating state.

As an example, the stable operating state of the microgrid may refer to a state at which the frequency of the microgrid is within a specific frequency range, and the voltage of the microgrid is within a specific voltage range.

As an example, for each power source cluster whose impedance value satisfies a second preset condition, at least one group of power sources in the power source cluster may be controlled according to the impedance value of the power source cluster. In other words, when the impedance value of a power source cluster meets the second preset condition, at least one power source in the at least one group of power sources in the power source cluster may be controlled according to the impedance value of the power source cluster. It should be understood that all or part of power sources in the power source cluster can be controlled based on the impedance value of the power source cluster.

As an example, the second preset condition may include that a duration for the impedance value being within a second impedance interval reaches the preset time period. The first impedance interval includes the second impedance interval, that is, a range of the first impedance interval is greater than a range of the second impedance interval, and the range of the second impedance interval is within the range of the first impedance interval.

As an example, the step S 103 may include: for each power source cluster whose impedance value satisfies the second preset condition, performing reactive power control on at least one group of grid-supporting power sources in the power source cluster based on the impedance value of the power source cluster; and/or, based on the impedance value of the power source cluster, performing both active power control and reactive power control on at least one group of grid-forming power sources in the power source cluster .

By performing reactive power auxiliary control of the grid-supporting power sources of the microgrid, the reactive output characteristics and the advantages of active flexible regulation of distributed wind turbines and photovoltaic power generation can be fully utilized, and a reasonable control strategy can be designed for dynamic stability control of the microgrid. It makes full use of reactive power support characteristics and flexible active power auxiliary characteristics of renewable energies, fully utilizes resources and capabilities of renewable energies, ensures improvements of higher quality and higher penetration rate of green energies, and guarantees economic benefits of user's electricity consumption.

By performing both the active power control and the reactive power control of the grid-generated power sources (that is, the grid-forming power sources) in the microgrid, which including stable power sources, it can ensure frequency stability and voltage stability of the system for a long period of time. For the fast swing of the power angle, the power angle swing can be quickly suppressed by controlling the power sources that can quickly respond to the active output.

Fig.9 shows a schematic diagram of various ranges of oscillation intervals according to an exemplary embodiment of the present disclosure.

In a first situation when the microgrid is operating under low load and the penetration rate of new energies is less than 30%, the more power electronic equipment in the system is connected in parallel, the more likely it is to trigger the system dynamic oscillation instability, which manifests itself as continuous oscillation and obvious noises. The impedance value measured at this stage is large, and the oscillation power angle swing range is usually around 30°, which corresponds to (a) in Fig.9. The impedance value measured at this stage is only within a first oscillation interval. In this oscillation mode, a part of the grid-following power sources can be stopped, and an output power of the grid-forming power sources can be increased to eliminate the oscillation. Alternatively, the control schemes for the grid-forming power sources and/or the grid-supporting power sources as described in the above exemplary embodiments may be used to stabilize the system to ensure stable operation of the system.

In a second situation when the load of the microgrid system increases and the penetration rate of new energies is between 30% and 70%, and multiple power sources are required to supply power at the same time, dynamic unstable oscillation easily arises in the microgrid system. The amplitude of the oscillation and the degree of the power angle swing are more serious than the previous situation. At this stage, the measured impedance is smaller than that in the first situation, and the oscillation power angle swing can up to about 60°, which corresponds to (b) in Fig.9. The impedance value measured at this stage enters a second oscillation interval, but does not enter a third oscillation interval. In this oscillation mode, reliable power supply to loads must be ensured, so the power sources should not be stopped. Instead, the control schemes for the grid-forming power sources and/or the grid-supporting power sources as described in the above exemplary embodiments may be used to stabilize the system to ensure stable operation of the system.

In a third situation when the load of the microgrid system further increases and the penetration rate of new energies reaches more than 70%, the microgrid system is very easy to trigger dynamic oscillation problems, and the oscillation phenomenon triggered may be the most serious. The impedance value measured at this stage is much smaller and the oscillation power angle swing is larger, and the center of the oscillation even appears inside the grid-forming power source of the microgrid, which corresponds to (c) in Fig. 9. The measured impedance value at this stage enters the third oscillation interval. In this oscillation mode, the control should be coordinated with relay protection of the microgrid to ensure safe and stable operation of the system.

As an example, the first impedance interval may include the first oscillation interval, the second oscillation interval, and the third oscillation interval. As an example, the second impedance interval may include the first oscillation interval and the second oscillation interval.

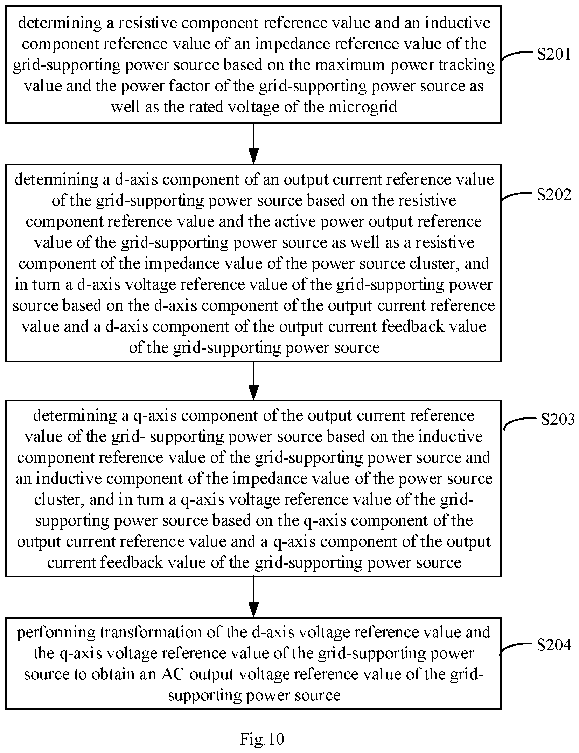

As an example, the performing the reactive power control on at least one group of grid-supporting power sources in the power source cluster according to the impedance value of the power source cluster may include: determining, for at least one grid-supporting power source among the at least one group of grid-supporting power sources in the power source cluster, an output voltage reference value of each of the at least one grid-supporting power source according to the impedance value of the power source cluster and at least one of the following items so as to control the grid-supporting power source: a rated voltage of the microgrid, or a maximum power tracking value, a power factor, an output current feedback value, or an active power output reference value of the grid-supporting power source. An exemplary embodiment of this step will be described below with reference to Fig. 10 to Fig. 12.

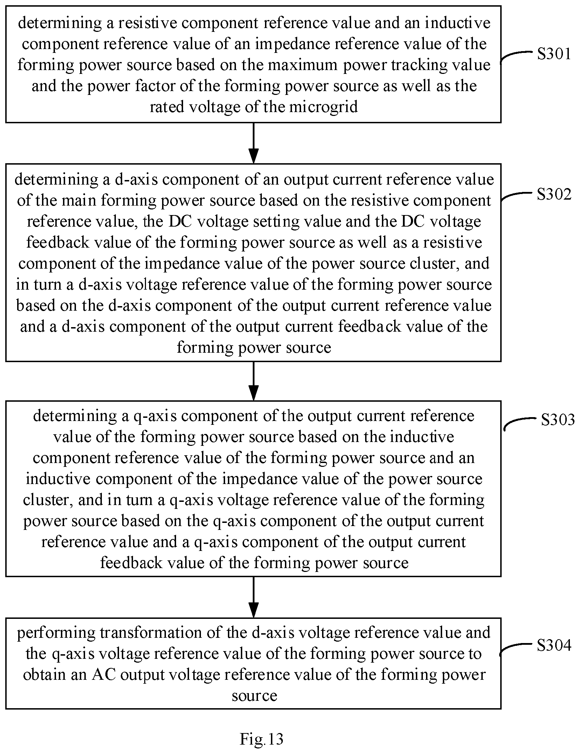

As an example, the performing both the reactive power control and the active power control on at least one group of grid-forming power sources in the power source cluster according to the impedance value of the power source cluster may include: determining, for at least one grid-forming power source among the at least one group of grid-forming power sources in the power source cluster, an output voltage reference value of each of the at least one grid-forming power source according to the impedance value of the power source cluster and at least one of the following items so as to control the grid-forming power source: a rated voltage of the microgrid, or a maximum power tracking value, a power factor, a current feedback value, a DC voltage setting value or a DC voltage feedback value of the grid-forming power source. An exemplary embodiment of this step will be described below with reference to Figs. 13 to 15.

Fig. 10 illustrates a flowchart of a method for determining an output voltage reference value of a grid-supporting power source in a power source cluster based on an impedance value of a power source cluster, according to an exemplary embodiment of the present disclosure.

Referring to Fig. 10, at step S201, a resistive component reference value and an inductive component reference value of an impedance reference value of the grid-supporting power source are determined based on the maximum power tracking value MPPT and the power factor PF of the grid-supporting power source as well as the rated voltage of the microgrid.

At step S202, a d-axis component of an output current reference value of the grid-supporting power source is determined based on the resistive component reference value and the active power output reference value of the grid-supporting power source as well as a resistive component of the impedance value of the power source cluster, and in turn a d-axis voltage reference value of the grid-supporting power source is determined based on the d-axis component of the output current reference value and a d-axis component of the output current feedback value of the grid-supporting power source.

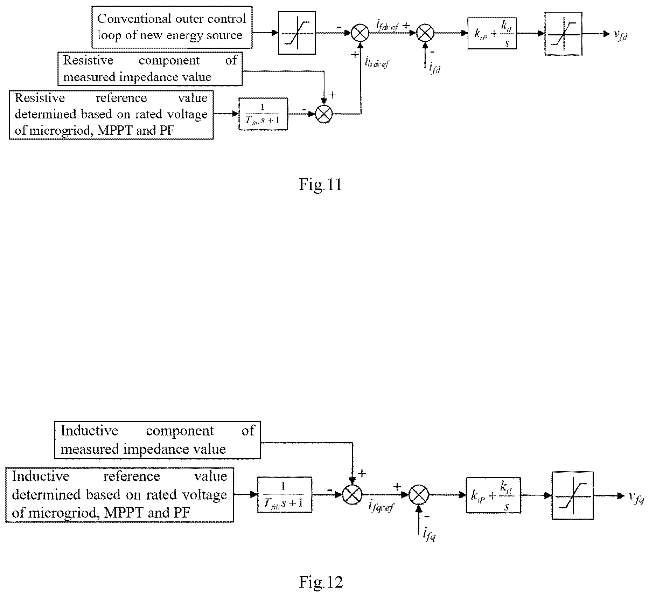

Referring to Fig. 11, a new energy source (i.e., a grid-supporting power source) routinely controls output of the outer control loop as follows: the active power output reference value of the grid-supporting power source. As an example, as shown in Fig. 11, the d-axis component $i_{fdref}$ of the output current reference value of the grid-supporting power source may be determined based on the resistive component of the impedance value of the power source cluster, the resistive component reference value of the grid-supporting power source after filtering, and the active power output reference value of the grid-supporting power source after amplitude limiting; then, a difference between the d-axis component $i_{fdref}$ of the output current reference value of the grid-supporting power source and the d-axis component $i_{fd}$ of the output current feedback value is inputted to a first PI controller after amplitude limiting, and an output of the first PI controller may be used as the d-axis voltage reference value $v_{fd}$ of the grid-supporting power source.

At step S203, a q-axis component of the output current reference value of the grid-supporting power source is determined based on the inductive component reference value of the grid-supporting power source and an inductive component of the impedance value of the power source cluster, and in turn a q-axis voltage reference value of the grid-supporting power source is determined based on the q-axis component of the output current reference value and a q-axis component of the output current feedback value of the grid-supporting power source.

As an example, as shown in Fig. 12, the q-axis component $i_{fqref}$ of the output current reference value of the grid-supporting power source may be obtained based on the inductive component of the impedance value of the power source cluster and the inductive component reference value of the grid-supporting power source after filtering; then, a difference between the q-axis component $i_{fqref}$ of the output current reference value of the grid-supporting power source and the q-axis component $i_{fq}$ of the output current feedback value is inputted to a second PI controller, and an output of the second PI controller after amplitude limiting may be used as the q-axis voltage reference value $v_{fq}$ of the grid-supporting power source.

At step S204, the d-axis voltage reference value and the q-axis voltage reference value of the grid-supporting power source are transformed to obtain an AC output voltage reference value of the grid-supporting power source.

As an example, the obtained AC output voltage reference value of the grid-supporting power source can be applied to the converter of the grid-supporting power source. As another example, the grid-supporting power source may further include additional auxiliary equipment (for example, a reactive power compensation device). When the grid-supporting power source includes the auxiliary equipment, the obtained AC output voltage reference value of the grid-supporting power source may be applicable to the auxiliary equipment.

According to the exemplary embodiment of the present disclosure, a grid-supporting power source such as a wind turbine or a photovoltaic power generation unit with "intermittency, uncertainty and volatility" is considered as a disturbance source, and the amount of disturbance injected into the microgrid by the power source is extracted, that is, the impedance value measured during real-time operation of the disturbance source is taken as a feedback value, and is used in stability control of the system together with the real-time maximum power tracking value, the power factor and the rated voltage of the microgrid system.

Fig. 13 illustrates a flowchart of a method for determining an output voltage reference value of a grid-forming power source in a power source cluster based on an impedance value of the power source cluster, according to an exemplary embodiment of the present disclosure.

Referring to Fig. 13, at step S301, a resistive component reference value and an inductive component reference value of an impedance reference value of the grid-forming power source are determined based on the maximum power tracking value and the power factor of the grid-forming power source as well as the rated voltage of the microgrid.

At step S302, a d-axis component of an output current reference value of the grid-forming power source is determined based on the resistive component reference value, the DC voltage setting value and the DC voltage feedback value of the grid-forming power source as well as a resistive component of the impedance value of the power source cluster, and in turn a d-axis voltage reference value of the grid-forming power source is determined based on the d-axis component of the output current reference value and a d-axis component of the output current feedback value of the grid-forming power source.

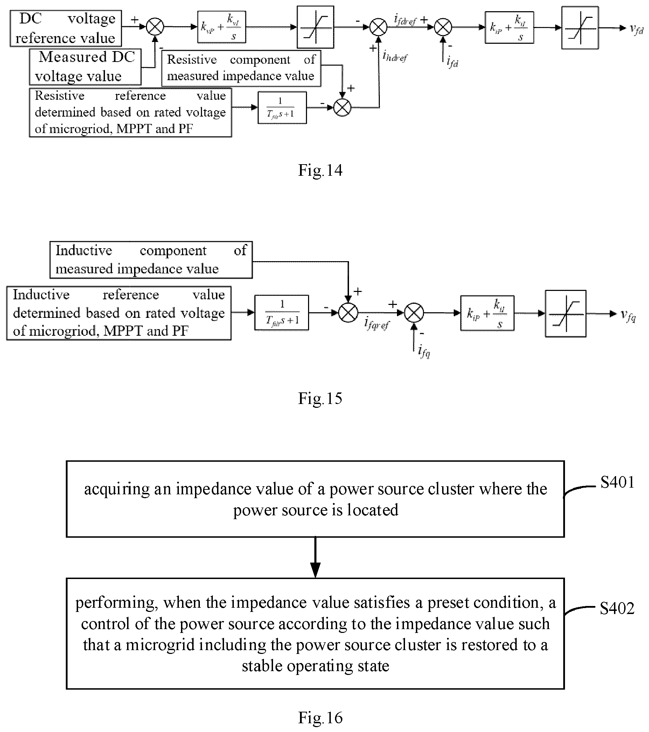

As an example, as shown in Fig. 14, the difference between the DC voltage setting value (i.e., the DC voltage reference value) of the grid-forming power source and the DC voltage feedback value may be inputted to a third PI controller; the d-axis component $i_{fdref}$ of the output current reference value of the grid-forming power source may be determined based on the resistive component of the impedance value of the power source cluster, the resistive component reference value of the grid-forming power source after filtering, and an output of the third PI controller after amplitude limiting; then a difference between d-axis component $i_{fdref}$ of the output current reference value of the grid-forming power source and a d-axis component $i_{fd}$ of the output current feedback value may be inputted to a fourth PI controller, and an output of the fourth PI controller after amplitude limiting may be used as the d-axis voltage reference value $v_{fd}$ of the grid-forming power source.

At step S303, a q-axis component of the output current reference value of the grid-forming power source is determined based on the inductive component reference value of the grid-forming power source and an inductive component of the impedance value of the power source cluster, and in turn a q-axis voltage reference value of the grid-forming power source is determined based on the q-axis component of the output current reference value and a q-axis component of the output current feedback value of the grid-forming power source.

As an example, as shown in Fig. 15, the q-axis component $i_{fqref}$ of the output current reference value of the grid-forming power source may be obtained based on the inductive component of the impedance value of the power source cluster and the inductive component reference value of the grid-forming power source after filtering; then, the difference between the q-axis component $i_{fqref}$ of the output current reference value of the grid-forming power source and the q-axis component $i_{fq}$ of the output current feedback value may be inputted to a fifth PI controller, and an output of the fifth PI controller after amplitude limiting may be used as the q-axis voltage reference value $v_{fq}$ of the grid-forming power source.

At step S304, the d-axis voltage reference value and the q-axis voltage reference value of the grid-forming power source are transformed to obtain an AC output voltage reference value of the grid-forming power source.

As an example, the obtained AC output voltage reference value of the grid-forming power source can be applied to the converter of the grid-forming power source. As another example, the grid-forming power source may further include additional auxiliary equipment (for example, a reactive power compensation device). When the grid-forming power source includes the auxiliary equipment, the obtained AC output voltage reference value of the grid-forming power source may be applicable to the auxiliary equipment.

According to the exemplary embodiment of the present disclosure, a grid-forming power source such as an energy storage device with "intermittency, uncertainty and volatility" is considered as a disturbance source and thus amount of disturbance injected into the microgrid by the source is extracted. That is, the real-time measured impedance of the disturbance source is used as the feedback value, and the real-time maximum power tracking value, power factor, and rated voltage of the microgrid system are used as references to control the system stability.

Furthermore, as an example, for each power source cluster whose impedance value satisfies the second preset condition, the impedance value of the power source cluster may be sent to at least one power source in at least one group of power sources in the power source cluster, so that the power source can adjust its own output voltage reference value according to the received impedance value to help the microgrid return to a stable state. The power source can use the method described in the above exemplary embodiments to determine its own output voltage reference value based on the impedance value, depending on its type (i.e., grid-forming power source or grid-supporting power source).

Fig. 16 illustrates a flowchart of a method for controlling a power source according to an exemplary embodiment of the present disclosure. As an example, the method for controlling a power source according to an exemplary embodiment of the present disclosure may be executed by a converter controller or a main controller of the power source.

Referring to Fig. 16, at step S401, an impedance value of a power source cluster where the power source is located is acquired.

As an example, the impedance value may be obtained from an impedance measurement device for measuring the impedance values of the power source cluster.

As another example, the impedance value of the power source cluster including the power source may be received from a microgrid controller.

At step S402, when the impedance value satisfies a preset condition, control of the power source according to the impedance value is performed such that a microgrid including the power source cluster is restored to a stable operating state.

The preset condition may include that a duration for the impedance value being within a preset impedance interval reaches a preset time period. As an example, the preset impedance interval may be the second impedance interval in the above exemplary embodiments.

As an example, the step S402 may include: when the power source is a grid-supporting power source, performing reactive power control on the power source according to the impedance value; and/or, when the power source is a grid-forming power source, performing both active power control and reactive power control on the power source according to the impedance value.

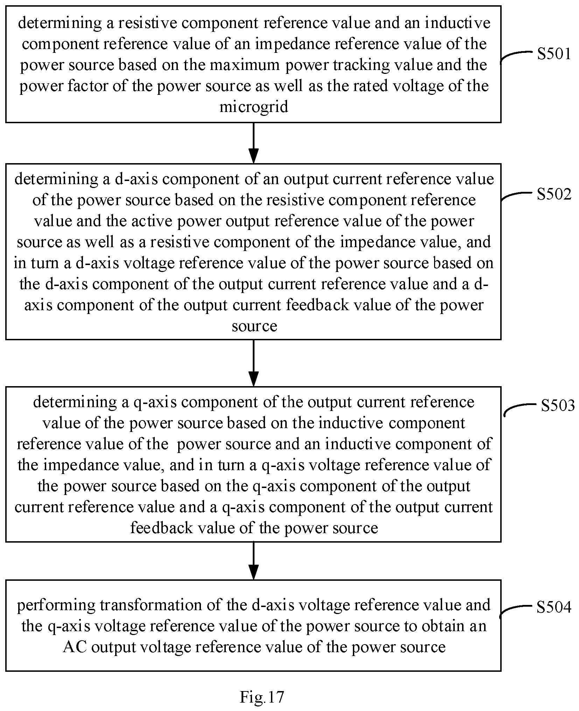

As an example, when the power source is a grid-supporting power source, the performing the reactive power control on the power source according to the impedance value may include: determining an output voltage reference value of the power source according to the impedance value and at least one of the following items so as to control the power source: a rated voltage of the microgrid, or a maximum power tracking value, a power factor, an output current feedback value, or an active power output reference value of the power source. An exemplary embodiment of this step will be described below in conjunction with Fig. 17.

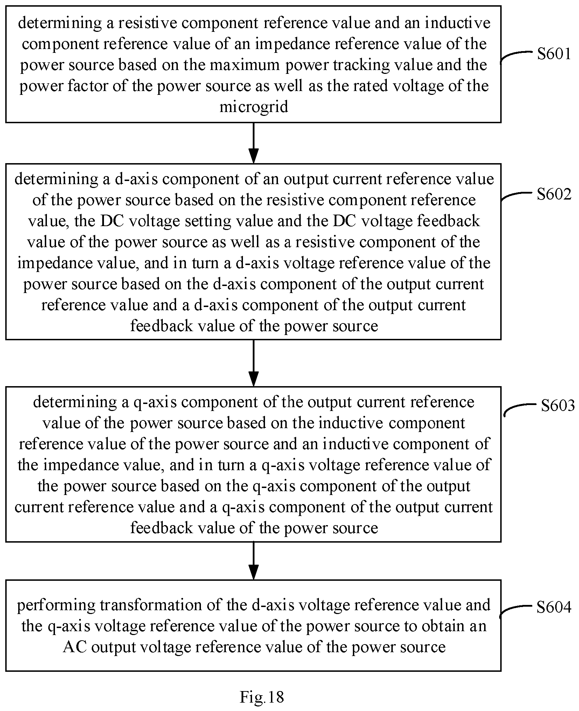

As an example, when the power source is a grid-forming power source, the performing both the active power control and the reactive power control on the power source according to the impedance value may include: determining an output voltage reference value of the power source according to the impedance value and at least one of the following items so as to control the power source: a rated voltage of the microgrid, or a maximum power tracking value, a power factor, a current feedback value, a DC voltage setting value or a DC voltage feedback value of the power source. An exemplary embodiment of this step will be described below in conjunction with Fig. 18.

As an example, the obtained AC output voltage reference value of the power source can be applied to the converter of the power source. As another example, the power source may further include additional auxiliary equipment (for example, a reactive power compensation device). When the power source includes the auxiliary equipment, the obtained AC output voltage reference value of the power source may be applicable to the auxiliary equipment.

Fig. 17 illustrates a flowchart of a method for determining an output voltage reference value of a power source based on an impedance value, according to an exemplary embodiment of the present disclosure.

Referring to Fig. 17, at step S501, a resistive component reference value and an inductive component reference value of an impedance reference value of the power source are determined based on the maximum power tracking value and the power factor of the power source as well as the rated voltage of the microgrid.

At step S502, a d-axis component of an output current reference value of the power source is determined based on the resistive component reference value and the active power output reference value of the power source as well as a resistive component of the impedance value, and in turn a d-axis voltage reference value of the power source is determined based on the d-axis component of the output current reference value and a d-axis component of the output current feedback value of the power source.

At step S503, a q-axis component of the output current reference value of the power source is determined based on the inductive component reference value of the power source and an inductive component of the impedance value, and in turn a q-axis voltage reference value of the power source is determined based on the q-axis component of the output current reference value and a q-axis component of the output current feedback value of the power source.

At step S504, the d-axis voltage reference value and the q-axis voltage reference value of the power source are transformed to obtain an AC output voltage reference value of the power source.

Fig. 18 illustrates a flowchart of a method of determining an output voltage reference value of a power source based on an impedance value, according to another exemplary embodiment of the present disclosure.

Referring to Fig. 18, at step S601, determining a resistive component reference value and an inductive component reference value of an impedance reference value of the power source are determined based on the maximum power tracking value and the power factor of the power source as well as the rated voltage of the microgrid.

At step S602, a d-axis component of an output current reference value of the power source is determined based on the resistive component reference value, the DC voltage setting value and the DC voltage feedback value of the power source as well as a resistive component of the impedance value, and in turn a d-axis voltage reference value of the power source is determined based on the d-axis component of the output current reference value and a d-axis component of the output current feedback value of the power source.

At step S603, a q-axis component of the output current reference value of the power source is determined based on the inductive component reference value of the power source and an inductive component of the impedance value, and in turn a q-axis voltage reference value of the power source is determined based on the q-axis component of the output current reference value and a q-axis component of the output current feedback value of the power source.

At step S604, the d-axis voltage reference value and the q-axis voltage reference value of the power source are transformed to obtain an AC output voltage reference value of the power source.

It should be understood that specific processing involved in the method for controlling a power source according to the exemplary embodiment of the present disclosure have been described in detail with reference to Figs.1 to 17, and the relevant details will not be repeated here.

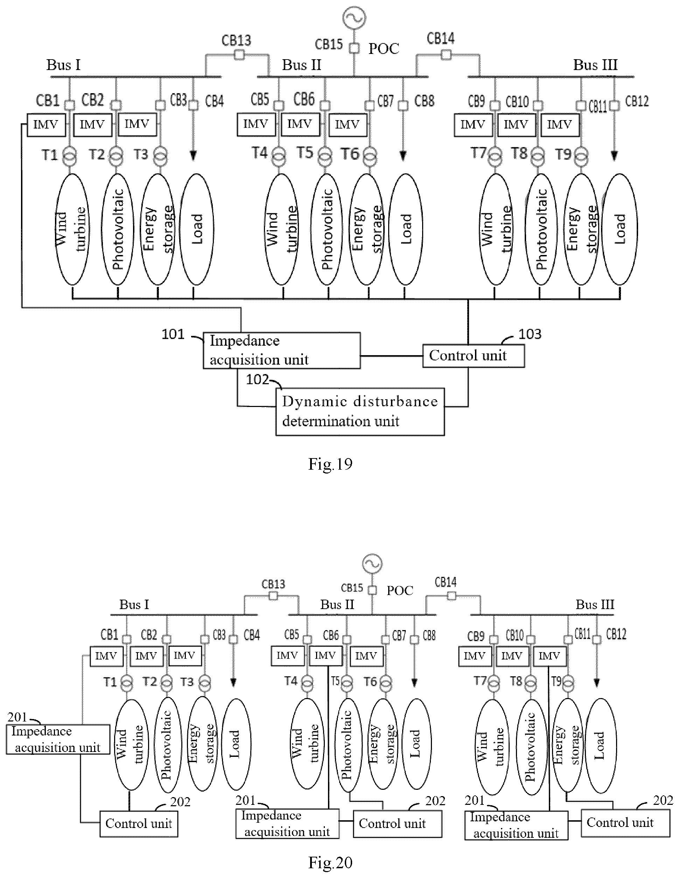

Fig. 19 illustrates a structural block diagram of an apparatus for controlling a microgrid according to an exemplary embodiment of the present disclosure.

As shown in Fig. 19, the apparatus 10 for controlling a microgrid according to an exemplary embodiment of the present disclosure includes: an impedance acquisition unit 101, a dynamic disturbance determination unit 102, and a control unit 103.

Specifically, the impedance acquisition unit 101 is configured to acquire impedance values of respective ones of power source clusters in the microgrid. Each of the power source clusters may include at least one group of grid-supporting power sources and/or at least one group of grid-forming power sources.

The dynamic disturbance determination unit 102 is configured to determine whether a dynamic disturbance occurs in the microgrid according to the acquired impedance values.

The control unit 103 is configured to perform, upon determining that the dynamic disturbance occurs in the microgrid, control of the microgrid according to the acquired impedance values such that the microgrid is restored to a stable operating state.

As an example, the impedance acquisition unit 101 may receive the impedance values of the power source clusters from corresponding impedance measurement devices for measuring the impedance values of the power source clusters. It should be understood that in Fig. 19, only one impedance measurement device is connected to the impedance acquisition unit 101 as an example. In fact, each of the impedance measurement devices can be connected to the impedance acquisition unit 101 either wired or wirelessly to provide the impedance acquisition unit 101 with measured impedance values.

As an example, the "wind turbine" on each section of the busbar may refer to a power source cluster including at least one wind turbine, and the "photovoltaic" on each section of the busbar may refer to a power source cluster including at least one photovoltaic power generation unit, the "energy storage" on each section of the busbar may refer to a power source cluster including at least one energy storage device.

As an example, the dynamic disturbance determination unit 102 may be configured to determine that the dynamic disturbance occurs in the microgrid when the impedance value of at least one of the power source clusters satisfies a first preset condition, wherein the first preset condition includes that a duration for the impedance value being within a first impedance interval reaches a preset time period.

As an example, the control unit 103 may be configured to: perform, for each power source cluster whose impedance value satisfies a second preset condition, control of at least one group of power sources in the power source cluster according to the impedance value of the power source cluster, wherein the second preset condition includes that a duration for the impedance value being within a second impedance interval reaches the preset time period, and the first impedance interval includes the second impedance interval.

As an example, the control unit 103 may be wired or wirelessly connected to individual power sources (e.g., a main controller or a converter controller of each of the power sources) to control the individual power sources. For example, the control unit 103 may send a control instruction to power sources in each power source cluster that meet the second preset condition.

As an example, the control unit 103 may be configured to: perform reactive power control on at least one group of grid-supporting power sources in the power source cluster according to the impedance value of the power source cluster; and/or, perform both active power control and reactive power control on at least one group of grid-forming power sources in the power source cluster according to the impedance value of the power source cluster.

As an example, the control unit 103 may be configured to: determine, for at least one grid-supporting power source among the at least one group of grid-supporting power sources in the power source cluster, an output voltage reference value of each of the at least one grid-supporting power source according to the impedance value of the power source cluster and at least one of the following items so as to control the grid-supporting power source: a rated voltage of the microgrid, or a maximum power tracking value, a power factor, an output current feedback value, or an active power output reference value of the grid-supporting power source.

As an example, the control unit 103 may be configured to: determine a resistive component reference value and an inductive component reference value of an impedance reference value of the grid-supporting power source based on the maximum power tracking value and the power factor of the grid-supporting power source as well as the rated voltage of the microgrid; determine a d-axis component of an output current reference value of the grid-supporting power source based on the resistive component reference value and the active power output reference value of the grid-supporting power source as well as a resistive component of the impedance value of the power source cluster, and in turn a d-axis voltage reference value of the grid-supporting power source based on the d-axis component of the output current reference value and a d-axis component of the output current feedback value of the grid-supporting power source; determine a q-axis component of the output current reference value of the grid-supporting power source based on the inductive component reference value of the grid-supporting power source and an inductive component of the impedance value of the power source cluster, and in turn a q-axis voltage reference value of the grid-supporting power source based on the q-axis component of the output current reference value and a q-axis component of the output current feedback value of the grid-supporting power source; and perform transformation of the d-axis voltage reference value and the q-axis voltage reference value of the grid-supporting power source to obtain an AC output voltage reference value of the grid-supporting power source.

As an example, the control unit 103 may be configured to: determine, for at least one grid-forming power source among the at least one group of grid-forming power sources in the power source cluster, an output voltage reference value of each of the at least one grid-forming power source according to the impedance value of the power source cluster and at least one of the following items so as to control the grid-forming power source: a rated voltage of the microgrid, or a maximum power tracking value, a power factor, a current feedback value, a DC voltage setting value or a DC voltage feedback value of the grid-forming power source.

As an example, the control unit 103 may be configured to: determine a resistive component reference value and an inductive component reference value of an impedance reference value of the grid-forming power source based on the maximum power tracking value and the power factor of the grid-forming power source as well as the rated voltage of the microgrid; determine a d-axis component of an output current reference value of the grid-forming power source based on the resistive component reference value, the DC voltage setting value and the DC voltage feedback value of the grid-forming power source as well as a resistive component of the impedance value of the power source cluster, and in turn a d-axis voltage reference value of the grid-forming power source based on the d-axis component of the output current reference value and a d-axis component of the output current feedback value of the grid-forming power source; determine a q-axis component of the output current reference value of the grid-forming power source based on the inductive component reference value of the grid-forming power source and an inductive component of the impedance value of the power source cluster, and in turn a q-axis voltage reference value of the grid-forming power source based on the q-axis component of the output current reference value and a q-axis component of the output current feedback value of the grid-forming power source; and perform transformation of the d-axis voltage reference value and the q-axis voltage reference value of the grid-forming power source to obtain an AC output voltage reference value of the grid-forming power source.

Fig.20 illustrates a structural block diagram of an apparatus for controlling a power source according to an exemplary embodiment of the present disclosure.

As shown in Fig.20, the apparatus 20 for controlling a power source according to an exemplary embodiment of the present disclosure includes: an impedance acquisition unit 201 and a control unit 202.

Specifically, the impedance obtaining unit 201 is configured to acquire an impedance value of a power source cluster including the power source.

The control unit 202 is configured to perform, when the impedance value satisfies a preset condition, control of the power source according to the impedance value such that a microgrid including the power source cluster is restored to a stable operating state, wherein the preset condition includes that a duration for the impedance value being within a preset impedance interval reaches a preset time period.

As an example, the control unit 202 may be configured to: when the power source is a grid-supporting power source, perform reactive power control on the power source according to the impedance value; and/or, when the power source is a grid-forming power source, perform both active power control and reactive power control on the power source according to the impedance value.

As an example, the impedance acquisition unit 201 may receive the impedance value of the power source cluster from an impedance measuring device for measuring the impedance value of the power source cluster including the power source, and the control unit 202 is configured to control the power source according to the received impedance value.

Fig.20 exemplarily illustrates only one power source (e.g., wind turbine, photovoltaic power generation unit, energy storage device) is included in a power source cluster, but it should be understood that each power source cluster may include at least one power source.

Fig.20 exemplarily illustrates only a control device 20 for one wind turbine, a control device 20 for one photovoltaic power generation unit, and a control device 20 for an energy storage device, but it should be understood that control devices 20 may be provided for the respective grid-supporting power sources and/or grid-forming power sources in the microgrid in a one-to-one correspondence. For example, the control device 20 of each power source may be provided in a converter controller and/or a main controller of the power source.

As an example, the control unit 202 may be configured to: when the power source is a grid-supporting power source, determine an output voltage reference value of the power source according to the impedance value and at least one of the following items so as to control the power source: a rated voltage of the microgrid, or a maximum power tracking value, a power factor, an output current feedback value, or an active power output reference value of the power source.

As an example, the control unit 202 may be configured to: determine a resistive component reference value and an inductive component reference value of an impedance reference value of the power source based on the maximum power tracking value and the power factor of the power source as well as the rated voltage of the microgrid; determine a d-axis component of an output current reference value of the power source based on the resistive component reference value, the DC voltage setting value and the DC voltage feedback value of the power source as well as a resistive component of the impedance value, and in turn a d-axis voltage reference value of the power source based on the d-axis component of the output current reference value and a d-axis component of the output current feedback value of the power source; determine a q-axis component of the output current reference value of the power source based on the inductive component reference value of the power source and an inductive component of the impedance value, and in turn a q-axis voltage reference value of the power source based on the q-axis component of the output current reference value and a q-axis component of the output current feedback value of the power source and perform transformation of the d-axis voltage reference value and the q-axis voltage reference value of the power source to obtain an AC output voltage reference value of the power source.

As an example, the control unit 202 may be configured to: when the power source is a grid-forming power source, determine an output voltage reference value of the power source according to the impedance value and at least one of the following items so as to control the power source: a rated voltage of the microgrid, or a maximum power tracking value, a power factor, a current feedback value, a DC voltage setting value or a DC voltage feedback value of the power source.

As an example, the control unit 202 may be configured to: determine a resistive component reference value and an inductive component reference value of an impedance reference value of the power source based on the maximum power tracking value and the power factor of the power source as well as the rated voltage of the microgrid; determine a d-axis component of an output current reference value of the power source based on the resistive component reference value, the DC voltage setting value and the DC voltage feedback value of the power source as well as a resistive component of the impedance value, and in turn a d-axis voltage reference value of the power source based on the d-axis component of the output current reference value and a d-axis component of the output current feedback value of the power source; determine a q-axis component of the output current reference value of the power source based on the inductive component reference value of the power source and an inductive component of the impedance value, and in turn a q-axis voltage reference value of the power source based on the q-axis component of the output current reference value and a q-axis component of the output current feedback value of the power source; and perform transformation of the d-axis voltage reference value and the q-axis voltage reference value of the power source to obtain an AC output voltage reference value of the power source.

It should be understood that the specific processing performed by the apparatus for controlling a microgrid and the apparatus for controlling a power source according to the exemplary embodiments of the present disclosure have been described in detail with reference to Figs.1 to 18, and the relevant details will not be repeated here.

It should be understood that each of the units in the apparatus for controlling a microgrid according to the exemplary embodiment of the present disclosure may be implemented as a hardware component and/or a software component. Those skilled in the art may, for example, use a field programmable gate array (FPGA) or an disclosure specific integrated circuit (ASIC) to implement each of the units according to the defined processing for each of the units.

It should be understood that each of the units in the apparatus for controlling a power source according to the exemplary embodiment of the present disclosure may be implemented as a hardware component and/or a software component. Those skilled in the art may, for example, use a field programmable gate array (FPGA) or an disclosure specific integrated circuit (ASIC) to implement each of the units according to the defined processing for each of the units.

The exemplary embodiments of the present disclosure provide a computer-readable storage medium storing a computer program which, when executed by a processor, causes the processor to perform the method for controlling a microgrid as described in the above exemplary embodiments. The computer-readable storage medium may be any data storage device that can store data read by a computer system. Examples of the computer-readable storage medium may include a read-only memory, a random access memory, an optical disk, a magnetic tape, a floppy disk, an optical data storage device, and carrier waves (such as data transmission over the Internet via a wired or wireless transmission path).

The exemplary embodiments of the present disclosure provide a computer-readable storage medium storing a computer program which, when executed by a processor, causes the processor to perform the method for controlling a power source as described in the above exemplary embodiments. The computer-readable storage medium may be any data storage device that can store data read by a computer system. Examples of the computer-readable storage medium may include a read-only memory, a random access memory, an optical disk, a magnetic tape, a floppy disk, an optical data storage device, and carrier waves (such as data transmission over the Internet via a wired or wireless transmission path).

The exemplary embodiments of the present disclosure provide a microgrid controller, including: a processor (not shown) and a memory (not shown), wherein the memory stores a computer program which, when executed by the processor, causes the processor to execute the method for controlling a microgrid as described in the above exemplary embodiments.

The exemplary embodiments of the present disclosure provide a microgrid controller, including: a processor (not shown) and a memory (not shown), wherein the memory stores a computer program which, when executed by the processor, causes the processor to execute the method for controlling a power source as described in the above exemplary embodiments. As an example, the controller may be provided as a converter controller and/or a main controller of the power source.

While a few exemplary embodiments of the present disclosure have been shown and described, it will be understood by those skilled in the art that modifications to these embodiments can be made without departing from the principles and gist of the present disclosure, which are defined by the appended claims and their equivalents.

**Claims**

1. A method for controlling a microgrid, comprising:

    acquiring impedance values of respective ones of power source clusters in the microgrid;
    determining whether a dynamic disturbance occurs in the microgrid according to the acquired impedance values; and
    performing, upon determining that the dynamic disturbance occurs in the microgrid, control of the microgrid according to the acquired impedance values such that the microgrid is restored to a stable operating state,
    wherein each of the power source clusters includes at least one group of grid-supporting power sources and/or at least one group of grid-forming power sources.

2. The method according to claim 1, wherein the determining whether the dynamic disturbance occurs in the microgrid according to the acquired impedance values comprises:

    determining that the dynamic disturbance occurs in the microgrid when the impedance value of at least one of the power source clusters satisfies a first preset condition,
    wherein the first preset condition includes that a duration for the impedance value being within a first impedance interval reaches a preset time period.

3. The method according to claim 2, wherein the performing the control of the microgrid according to the acquired impedance values comprises:

    performing, for each power source cluster whose impedance value satisfies a second preset condition, control of at least one group of power sources in the power source cluster according to the impedance value of the power source cluster,
    wherein the second preset condition includes that a duration for the impedance value being within a second impedance interval reaches the preset time period, and the first impedance interval includes the second impedance interval.

4. The method according to claim 3, wherein the performing the control of at least one group of power sources in the power source cluster according to the impedance value of the power source cluster comprises:

    performing reactive power control on at least one group of grid-supporting power sources in the power source cluster according to the impedance value of the power source cluster; and/or
    performing both active power control and reactive power control on at least one group of grid-forming power sources in the power source cluster according to the impedance value of the power source cluster.

5. The method according to claim 4, wherein the performing the reactive power control on at least one group of grid-supporting power sources in the power source cluster according to the impedance value of the power source cluster comprises:
    determining, for at least one grid-supporting power source among the at least one group of grid-supporting power sources in the power source cluster, an output voltage reference value of each of the at least one grid-supporting power source according to the impedance value of the power source cluster and at least one of the following items so as to control the grid-supporting power source: a rated voltage of the microgrid, or a maximum power tracking value, a power factor, an output current feedback value, or an active power output reference value of the grid-supporting power source.

6. The method according to claim 5, wherein the determining, for at least one grid-supporting power source among the at least one group of grid-supporting power sources in the power source cluster, the output voltage reference value of each of the at least one grid-supporting power source comprises:

determining a resistive component reference value and an inductive component reference value of an impedance reference value of the grid-supporting power source based on the maximum power tracking value and the power factor of the grid-supporting power source as well as the rated voltage of the microgrid;

determining a d-axis component of an output current reference value of the grid-supporting power source based on the resistive component reference value and the active power output reference value of the grid-supporting power source as well as a resistive component of the impedance value of the power source cluster, and in turn a d-axis voltage reference value of the grid-supporting power source based on the d-axis component of the output current reference value and a d-axis component of the output current feedback value of the grid-supporting power source;

determining a q-axis component of the output current reference value of the grid-supporting power source based on the inductive component reference value of the grid-supporting power source and an inductive component of the impedance value of the power source cluster, and in turn a q-axis voltage reference value of the grid-supporting power source based on the q-axis component of the output current reference value and a q-axis component of the output current feedback value of the grid-supporting power source; and

performing transformation of the d-axis voltage reference value and the q-axis voltage reference value of the grid-supporting power source to obtain an AC output voltage reference value of the grid-supporting power source.

7. The method according to claim 4, wherein the performing both the active power control and the reactive power control on at least one group of grid-forming power sources in the power source cluster according to the impedance value of the power source cluster comprises:

determining, for at least one grid-forming power source among the at least one group of grid-forming power sources in the power source cluster, an output voltage reference value of each of the at least one grid-forming power source according to the impedance value of the power source cluster and at least one of the following items so as to control the grid-forming power source: a rated voltage of the microgrid, or a maximum power tracking value, a power factor, a current feedback value, a DC voltage setting value or a DC voltage feedback value of the grid-forming power source.

8. The method according to claim 7, wherein the determining, for at least one grid-forming power source among the at least one group of grid-forming power sources in the power source cluster, the output voltage reference value of each of the at least one grid-forming power source comprises:

determining a resistive component reference value and an inductive component reference value of an impedance reference value of the grid-forming power source based on the maximum power tracking value and the power factor of the grid-forming power source as well as the rated voltage of the microgrid;

determining a d-axis component of an output current reference value of the grid-forming power source based on the resistive component reference value, the DC voltage setting value and the DC voltage feedback value of the grid-forming power source as well as a resistive component of the impedance value of the power source cluster, and in turn a d-axis voltage reference value of the grid-forming power source based on the d-axis component of the output current reference value and a d-axis component of the output current feedback value of the grid-forming power source;

determining a q-axis component of the output current reference value of the grid-forming power source based on the inductive component reference value of the grid-forming power source and an inductive component of the impedance value of the power source cluster, and in turn a q-axis voltage reference value of the grid-forming power source based on the q-axis component of the output current reference value and a q-axis component of the output current feedback value of the grid-forming power source; and

performing transformation of the d-axis voltage reference value and the q-axis voltage reference value of the grid-forming power source to obtain an AC output voltage reference value of the grid-forming power source.

9. A method for controlling a power source, comprising:

acquiring an impedance value of a power source cluster including the power source; and

performing, when the impedance value satisfies a preset condition, control of the power source according to the impedance value such that a microgrid including the power source cluster is restored to a stable operating state, wherein the preset condition includes that a duration for the impedance value being within a preset impedance interval reaches a preset time period.

**10.** The method according to claim 9, wherein the performing the control of the power source according to the impedance value comprises:

performing reactive power control on the power source according to the impedance value in a case where the power source is a grid-supporting power source; and/or

performing both active power control and reactive power control on the power source according to the impedance value in a case where the power source is a grid-forming power source.

**11.** The method according to claim 10, wherein the performing the reactive power control on the power source according to the impedance value in a case where the power source is a grid-supporting power source comprises: determining an output voltage reference value of the power source according to the impedance value and at least one of the following items so as to control the power source: a rated voltage of the microgrid, or a maximum power tracking value, a power factor, an output current feedback value, or an active power output reference value of the power source.

**12.** The method according to claim 11, wherein the determining the output voltage reference value of the power source in the case where the power source is a grid-supporting power source comprising:

determining a resistive component reference value and an inductive component reference value of an impedance reference value of the power source based on the maximum power tracking value and the power factor of the power source as well as the rated voltage of the microgrid;

determining a d-axis component of an output current reference value of the power source based on the resistive component reference value and the active power output reference value of the power source as well as a resistive component of the impedance value, and in turn a d-axis voltage reference value of the power source based on the d-axis component of the output current reference value and a d-axis component of the output current feedback value of the power source;

determining a q-axis component of the output current reference value of the power source based on the inductive component reference value of the power source and an inductive component of the impedance value, and in turn a q-axis voltage reference value of the power source based on the q-axis component of the output current reference value and a q-axis component of the output current feedback value of the power source; and

performing transformation of the d-axis voltage reference value and the q-axis voltage reference value of the power source to obtain an AC output voltage reference value of the power source.

**13.** The method according to claim 10, wherein the performing both the active power control and the reactive power control on the power source according to the impedance value in a case where the power source is a grid-forming power source comprises:

determining an output voltage reference value of the power source according to the impedance value and at least one of the following items so as to control the power source: a rated voltage of the microgrid, or a maximum power tracking value, a power factor, a current feedback value, a DC voltage setting value or a DC voltage feedback value of the power source.

**14.** The method according to claim 13, wherein the determining the output voltage reference value of the power source in the case where the power source is a grid-forming power source comprises:

determining a resistive component reference value and an inductive component reference value of an impedance reference value of the power source based on the maximum power tracking value and the power factor of the power source as well as the rated voltage of the microgrid;

determining a d-axis component of an output current reference value of the power source based on the resistive component reference value, the DC voltage setting value and the DC voltage feedback value of the power source as well as a resistive component of the impedance value, and in turn a d-axis voltage reference value of the power source based on the d-axis component of the output current reference value and a d-axis component of the output current feedback value of the power source;

determining a q-axis component of the output current reference value of the power source based on the inductive component reference value of the power source and an inductive component of the impedance value, and in turn a q-axis voltage reference value of the power source based on the q-axis component of the output current reference value and a q-axis component of the output current feedback value of the power source; and

performing transformation of the d-axis voltage reference value and the q-axis voltage reference value of the power source to obtain an AC output voltage reference value of the power source.

15. An apparatus for controlling a microgrid, comprising:

an impedance acquisition unit configured to acquire impedance values of respective ones of power source clusters in the microgrid;
a dynamic disturbance determination unit configured to determine whether a dynamic disturbance occurs in the microgrid according to the acquired impedance values; and
a control unit configured to perform, upon determining that the dynamic disturbance occurs in the microgrid, control of the microgrid according to the acquired impedance values such that the microgrid is restored to a stable operating state,
wherein each of the power source clusters includes at least one group of grid-supporting power sources and/or at least one group of grid-forming power sources.

16. An apparatus for controlling a power source, comprising:

an impedance acquisition unit configured to acquire an impedance value of a power source cluster including the power source; and
a control unit configured to perform, when the impedance value satisfies a preset condition, control of the power source according to the impedance value such that a microgrid including the power source cluster is restored to a stable operating state,
wherein the preset condition includes that a duration for the impedance value being within a preset impedance interval reaches a preset time period.

17. A computer-readable storage medium storing a computer program, which causes, when executed by a processor, the processor to perform the method for controlling a microgrid according to any one of claims 1 to 8 or the method for controlling a power source according to any one of claims 9 to 14.

18. A microgrid controller, comprising:

a processor; and
a memory storing a computer program, which causes, when executed by the processor, the processor to perform the method for controlling a microgrid according to any one of claims 1 to 8.

19. A power source controller, comprising:

a processor; and
a memory storing a computer program, which causes, when executed by the processor, the processor to perform the method for controlling a power source according to any one of claims 9 to 14.

Fig.1

Fig.2

(a)　　　　(b)　　　　(c)　　　　(d)

Fig.3

Fig.4

(a)　　　　　　(b)　　　　　　(c)　　　　　　(d)

Fig.5

Fig.6

Fig.7

Fig.8

Range of first oscillation interval

(a) Schematic diagram of only within the first oscillation interval

Range of second oscillation interval

Range of third oscillation interval

(b) Schematic diagram of entering t h e second oscillation interval, but not entering the third oscillation interval

(c) Schematic diagram of entering the third oscillation interval

Fig.9

determining a resistive component reference value and an inductive component reference value of an impedance reference value of the grid-supporting power source based on the maximum power tracking value and the power factor of the grid-supporting power source as well as the rated voltage of the microgrid — S201

determining a d-axis component of an output current reference value of the grid-supporting power source based on the resistive component reference value and the active power output reference value of the grid-supporting power source as well as a resistive component of the impedance value of the power source cluster, and in turn a d-axis voltage reference value of the grid-supporting power source based on the d-axis component of the output current reference value and a d-axis component of the output current feedback value of the grid-supporting power source — S202

determining a q-axis component of the output current reference value of the grid- supporting power source based on the inductive component reference value of the grid-supporting power source and an inductive component of the impedance value of the power source cluster, and in turn a q-axis voltage reference value of the grid-supporting power source based on the q-axis component of the output current reference value and a q-axis component of the output current feedback value of the grid-supporting power source — S203

performing transformation of the d-axis voltage reference value and the q-axis voltage reference value of the grid-supporting power source to obtain an AC output voltage reference value of the grid-supporting power source — S204

Fig.10

EP 4 478 571 A1

Fig.11

Fig.12

22

determining a resistive component reference value and an inductive component reference value of an impedance reference value of the forming power source based on the maximum power tracking value and the power factor of the forming power source as well as the rated voltage of the microgrid ⌐ S301

determining a d-axis component of an output current reference value of the main forming power source based on the resistive component reference value, the DC voltage setting value and the DC voltage feedback value of the forming power source as well as a resistive component of the impedance value of the power source cluster, and in turn a d-axis voltage reference value of the forming power source based on the d-axis component of the output current reference value and a d-axis component of the output current feedback value of the forming power source ⌐ S302

determining a q-axis component of the output current reference value of the forming power source based on the inductive component reference value of the forming power source and an inductive component of the impedance value of the power source cluster, and in turn a q-axis voltage reference value of the forming power source based on the q-axis component of the output current reference value and a q-axis component of the output current feedback value of the forming power source ⌐ S303

performing transformation of the d-axis voltage reference value and the q-axis voltage reference value of the forming power source to obtain an AC output voltage reference value of the forming power source ⌐ S304

Fig.13

DC voltage reference value

Measured DC voltage value

Resistive component of measured impedance value

Resistive reference value determined based on rated voltage of microgriod, MPPT and PF

$k_{vP} + \dfrac{k_{vI}}{s}$

$\dfrac{1}{T_{filr}s + 1}$

$k_{iP} + \dfrac{k_{iI}}{s}$

$i_{fdref}$

$i_{hdref}$

$i_{fd}$

$v_{fd}$

Fig.14

Inductive component of measured impedance value

Inductive reference value determined based on rated voltage of microgriod, MPPT and PF

$\dfrac{1}{T_{filr}s + 1}$

$k_{iP} + \dfrac{k_{iI}}{s}$

$i_{fqref}$

$i_{fq}$

$v_{fq}$

Fig.15

acquiring an impedance value of a power source cluster where the power source is located — S401

performing, when the impedance value satisfies a preset condition, a control of the power source according to the impedance value such that a microgrid including the power source cluster is restored to a stable operating state — S402

Fig.16

determining a resistive component reference value and an inductive component reference value of an impedance reference value of the power source based on the maximum power tracking value and the power factor of the power source as well as the rated voltage of the microgrid — S501

determining a d-axis component of an output current reference value of the power source based on the resistive component reference value and the active power output reference value of the power source as well as a resistive component of the impedance value, and in turn a d-axis voltage reference value of the power source based on the d-axis component of the output current reference value and a d-axis component of the output current feedback value of the power source — S502

determining a q-axis component of the output current reference value of the power source based on the inductive component reference value of the power source and an inductive component of the impedance value, and in turn a q-axis voltage reference value of the power source based on the q-axis component of the output current reference value and a q-axis component of the output current feedback value of the power source — S503

performing transformation of the d-axis voltage reference value and the q-axis voltage reference value of the power source to obtain an AC output voltage reference value of the power source — S504

Fig.17

determining a resistive component reference value and an inductive component reference value of an impedance reference value of the power source based on the maximum power tracking value and the power factor of the power source as well as the rated voltage of the microgrid — S601

determining a d-axis component of an output current reference value of the power source based on the resistive component reference value, the DC voltage setting value and the DC voltage feedback value of the power source as well as a resistive component of the impedance value, and in turn a d-axis voltage reference value of the power source based on the d-axis component of the output current reference value and a d-axis component of the output current feedback value of the power source — S602

determining a q-axis component of the output current reference value of the power source based on the inductive component reference value of the power source and an inductive component of the impedance value, and in turn a q-axis voltage reference value of the power source based on the q-axis component of the output current reference value and a q-axis component of the output current feedback value of the power source — S603

performing transformation of the d-axis voltage reference value and the q-axis voltage reference value of the power source to obtain an AC output voltage reference value of the power source — S604

Fig.18

Fig.19

Fig.20

## INTERNATIONAL SEARCH REPORT

International application No.

**PCT/CN2022/122095**

| A. | CLASSIFICATION OF SUBJECT MATTER |
|---|---|
| | H02J 3/24(2006.01)i |

According to International Patent Classification (IPC) or to both national classification and IPC

| B. | FIELDS SEARCHED |
|---|---|

Minimum documentation searched (classification system followed by classification symbols)

H02J3/-

Documentation searched other than minimum documentation to the extent that such documents are included in the fields searched

Electronic data base consulted during the international search (name of data base and, where practicable, search terms used)

CNABS; CNTXT; VEN; DWPI; WOTXT; EPTXT; USTXT; CNKI; IEEE: 阻抗, 扰动, 持续, 时长, 微电网, 区间, 电源, 恢复, 稳定, 无功, impendance, disturbance, last, period, microgrid, section, power supply, recover, stable, reactive power

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 110829448 A (STATE GRID JIANGSU ELECTRIC POWER CO., LTD. RESEARCH INSTITUTE et al.) 21 February 2020 (2020-02-21) description, paragraphs 2-159 | 1-5, 7, 9-11, 13, 15-19 |
| Y | CN 1377517 A (SIEMENS AG) 30 October 2002 (2002-10-30) description, pages 1-8 | 1-5, 7, 15, 17-18 |
| Y | CN 112952895 A (ECONOMIC AND TECHNOLOGICAL RESEARCH INSTITUTE, STATE GRID XINJIANG ELECTRIC POWER CO., LTD. et al.) 11 June 2021 (2021-06-11) description, paragraphs 6-7 | 1-5, 7, 10-11, 13, 17-19 |
| Y | CN 104218603 A (SUNGROW POWER SUPPLY CO., LTD.) 17 December 2014 (2014-12-17) description, paragraphs 55-149, and figures 1-8 | 9-11, 13, 16-17, 19 |
| Y | CN 105119286 A (NR ELECTRIC CO., LTD. et al.) 02 December 2015 (2015-12-02) description, paragraphs 42-86, and figures 1-5 | 1-5, 7, 9-11, 13, 15-19 |
| A | CN 102749517 A (BEIJING SIFANG AUTOMATION CO., LTD.) 24 October 2012 (2012-10-24) entire document | 1-19 |

☑ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 December 2022** | **06 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| | International application No. |
|---|---|
| | **PCT/CN2022/122095** |

**C.    DOCUMENTS CONSIDERED TO BE RELEVANT**

| Category* | Citation of document, with indication, where appropriate, of the relevant passages | Relevant to claim No. |
|---|---|---|
| A | CN 108469575 A (GLOBAL ENERGY INTERCONNECTION RESEARCH INSTITUTE CO., LTD. et al.) 31 August 2018 (2018-08-31)<br>      entire document | 1-19 |
| A | CN 103390892 A (STATE GRID CORPORATION OF CHINA et al.) 13 November 2013 (2013-11-13)<br>      entire document | 1-19 |
| A | US 2019267794 A1 (AG, A.S. et al.) 29 August 2019 (2019-08-29)<br>      entire document | 1-19 |

Form PCT/ISA/210 (second sheet) (January 2015)

## INTERNATIONAL SEARCH REPORT
### Information on patent family members

International application No.

**PCT/CN2022/122095**

| Patent document cited in search report | | | Publication date (day/month/year) | Patent family member(s) | | | Publication date (day/month/year) |
|---|---|---|---|---|---|---|---|
| CN | 110829448 | A | 21 February 2020 | None | | | |
| CN | 1377517 | A | 30 October 2002 | WO | 0124343 | A1 | 05 April 2001 |
| | | | | DE | 19948694 | A1 | 03 May 2001 |
| | | | | US | 6778919 | B1 | 17 August 2004 |
| | | | | DE | 50012092 | D1 | 06 April 2006 |
| | | | | HK | 1048894 | A1 | 17 April 2003 |
| | | | | EP | 1219001 | A1 | 03 July 2002 |
| | | | | CN | 1454423 | A | 05 November 2003 |
| | | | | CN | 1213580 | C | 03 August 2005 |
| | | | | CN | 100459363 | C | 04 February 2009 |
| | | | | DE | 19948694 | B4 | 06 April 2006 |
| | | | | EP | 1219001 | B1 | 18 January 2006 |
| | | | | HK | 1048894 | B | 26 June 2009 |
| CN | 112952895 | A | 11 June 2021 | None | | | |
| CN | 104218603 | A | 17 December 2014 | CN | 104218603 | B | 28 December 2016 |
| CN | 105119286 | A | 02 December 2015 | CN | 105119286 | B | 17 May 2017 |
| CN | 102749517 | A | 24 October 2012 | CN | 102749517 | B | 20 August 2014 |
| CN | 108469575 | A | 31 August 2018 | None | | | |
| CN | 103390892 | A | 13 November 2013 | CN | 103390892 | B | 22 July 2015 |
| US | 2019267794 | A1 | 29 August 2019 | US | 11309702 | B2 | 19 April 2022 |

Form PCT/ISA/210 (patent family annex) (January 2015)